Europäisches Patentamt

European Patent Office

Office européen des brevets

(11) Veröffentlichungsnummer : **0 114 233**
**B1**

(12) **EUROPÄISCHE PATENTSCHRIFT**

(45) Veröffentlichungstag der Patentschrift :
26.03.86

(51) Int. Cl.⁴ : **H 01 M 10/50, H 01 M 10/39**

(21) Anmeldenummer : **83111472.3**

(22) Anmeldetag : **17.11.83**

(54) **Hochtemperaturspeicherbatterie.**

(30) Priorität : **24.12.82 DE 3247969**

(43) Veröffentlichungstag der Anmeldung :
**01.08.84 Patentblatt 84/31**

(45) Bekanntmachung des Hinweises auf die Patenterteilung : **26.03.86 Patentblatt 86/13**

(84) Benannte Vertragsstaaten :
**BE FR GB IT NL**

(56) Entgegenhaltungen :
**EP-A- 0 065 248**
**DE-A- 2 610 222**
**DE-A- 2 835 501**
**GB-A- 1 386 525**

(73) Patentinhaber : **BROWN, BOVERI & CIE Aktiengesellschaft**
**Kallstadter Strasse 1**
**D-6800 Mannheim 31 (DE)**

(72) Erfinder : **Esrom, Hilmar, Dipl.-Phys.**
**Robertstrasse 27**
**D-3000 Hannover-List (DE)**

(74) Vertreter : **Kempe, Wolfgang, Dr. et al**
**c/o Brown, Boveri & Cie AG Postfach 351**
**D-6800 Mannheim 1 (DE)**

## Beschreibung

Die Erfindung bezieht sich auf eine Hochtemperaturspeicherbatterie gemäß dem Oberbegriff des Patentanspruches 1.

Solche Hochtemperaturspeicherbatterien mit elektrochemischen Speicherzellen auf der Basis von Alkalimetall und Chalkogen werden in vermehrtem Maße für den Elektroantrieb von Fahrzeugen eingesetzt.

Die bis jetzt bekannt gewordenen Hochtemperaturspeicherbatterien mit elektrochemischen Speicherzellen der oben genannten Bauart arbeiten bei einer Temperatur von 350 °C. Um Wärmeverluste, insbesondere in den Ruhepausen der Hochtemperaturspeicherbatterien zu vermeiden, sind diese von einer thermischen Isolierung umgeben. Bei den chemischen Reaktionen, die in den Speicherzellen während des Betriebs derselben ablaufen, wird soviel Wärme erzeugt, daß eine Kühlung der Speicherzellen erforderlich ist, damit die oben angegebene Temperatur von 350 °C dauerhaft gehalten werden kann und nicht überschritten wird. Kommt es zu einem Temperaturanstieg innerhalb der Hochtemperaturspeicherbatterie auf Werte, die wesentlich über der Arbeitstemperatur der Speicherzellen liegen, so ist eine Beschädigung derselben, insbesondere ihres Festelektrolyten nicht auszuschließen.

Aus der GB-PS 13 86 525 ist eine Hochtemperaturspeicherbatterie mit einer Kühlung bekannt. Diese Hochtemperaturspeicherbatterie ist aus einer Vielzahl von Speicherzellen aufgebaut, die sich in einem Aluminiumbehälter befinden. Dieser Behälter ist doppelwandig ausgebildet. Zwischen der inneren und äußeren Begrenzungswandung des Behälters ist ein Isoliermaterial angeordnet. Ferner weist der Behälter eine Zu- und eine Ableitung für ein Kühlmedium auf. Dieses kann in das Innere des Behälters geleitet und um die Speicherzellen herumgeführt werden, wobei es die von den Speicherzellen abgegebene Wärme aufnimmt. Anschließend wird das Kühlmedium über die Ableitung nach außen abgeführt.

Von Nachteil ist bei dieser Anordnung, daß das Kühlmedium nur um die Gesamtheit der Speicherzellen herumgeleitet werden kann. Bei dieser Anordnung ist es nicht möglich, jede Speicherzelle mit der für sie erforderlichen individuellen Menge an Kühlluft zu versorgen.

Der Erfindung liegt deshalb die Aufgabe zugrunde, mit einem Minimum an baulichem Aufwand eine Hochtemperaturspeicherbatterie zu schaffen, die eine optimale Kühlung aller Speicherzellen gewährleistet und ein Maximum an Sicherheit bietet.

Diese Aufgabe wird gemäß den kennzeichnenden Merkmalen des Patentanspruches 1 gelöst.

Erfindungsgemäß sind die Speicherzellen der Hochtemperaturspeicherbatterie in Modulen zusammengefaßt. Diese Module sind im Innenraum des Gehäuses angeordnet. Jeder Modul weist einen Verteiler für die Kühlluft auf. Vorzugsweise sind die Verteiler als Platten ausgebildet. Der Verteiler kann entweder über den oberen Enden der Speicherzellen oder unter den unteren Enden der Speicherzellen angeordnet werden. Ist die Eintrittsöffnung des Kühlmediums im oberen Bereich des Innenraumes angeordnet, so wird der Verteiler zwischen der Eintrittsöffnung und den oberen Enden der Speicherzellen in einem geringen Abstand von diesen positioniert. Bei der Anordnung des Verteilers im unteren Bereich des Innenraums ist es sinnvoll, selbigen zwischen den unteren Enden der Speicherzellen und der Austrittsöffnung des Kühlmediums zu installieren. Die in den Modulen angeordneten Speicherzellen sind freitragend gehalten und so positioniert, daß zwischen jeweils vier benachbarten Speicherzellen wenigstens ein Freiraum verbleibt, der sich vom oberen bis zum unteren Ende der Speicherzellen erstreckt. Bei einer Ausführungsform der Erfindung ist der Verteiler mit Öffnungen versehen, über die das Kühlmedium den Speicherzellen zugeleitet werden kann. Die Öffnungen des Verteilers sind so angeordnet, daß sie über den Bereichen angeordnet sind, in denen sich die Freiräume zwischen den Speicherzellen befinden, so daß das Kühlmedium über die Löcher in diese Freiräume geleitet werden kann. Vorzugsweise sind zwischen den Speicherzellen und der inneren Gehäusewandung ebenfalls Freiräume vorgesehen. In diesen Bereichen ist der jeweilige Verteiler ebenfalls mit Öffnungen versehen. Durch eine spezielle Ausbildung der Öffnungen kann eine besondere Leitung der Kühlluft in die Freiräume erzielt werden. Insbesondere besteht die Möglichkeit, die Öffnungen auf der Unterseite des Verteilers mit einem Flansch zu versehen, so daß das gesamte, in die Öffnung einströmende Kühlmedium in den Freiraum geleitet wird und nicht an der Unterseite des Verteilers entlangströmen kann. Düsenförmige Ausbildungen an der Unterseite der Öffnungen sind ebenfalls möglich, mit denen die Strömungsgeschwindigkeit des Kühlmittels zusätzlich bestimmt werden kann. Die Durchmesser der Öffnungen können bei einem Verteiler entweder alle gleich groß oder mit unterschiedlichen Abmessungen versehen werden. Die Größe der Öffnungen richtet sich nach der gewünschten Menge des in die Freiräume zu leitenden Kühlmediums. Vorzugsweise werden die im mittleren Bereich angeordneten Öffnungen größer gewählt. Dies ist deshalb sinnvoll, da gerade um die in der Mitte angeordneten Speicherzellen ein größerer Wärmestau entsteht, so daß hier eine größere Menge an Kühlluft erforderlich ist. Die Anzahl der Öffnungen und ihre Durchmesser müssen vor dem Bau einer jeden Hochtemperaturspeicherzelle entweder rechnerisch oder experimentell ermittelt werden. Bei einer weiteren Ausführungsform ist der Verteiler zweiteilig ausgebildet. Die beiden Teile sind durch einen großen Freiraum voneinander getrennt, über den eine besonders große Menge an Kühlmedium den in der Mitte angeordneten Speicherzellen zuführbar ist. Bei einer anderen Ausführungsform ist der Verteiler als Keil ausgebildet, wobei zwischen der oberen und unteren Begrenzugsfläche des Keils ein Isoliermaterial angeordnet ist. Durch die Verwendung eines solchen Verteilers, der entweder innerhalb eines Moduls angeordnet ist, oder falls die Hochtemperaturspeicherbatterie eine solche Unterteilung in Module nicht aufweist, sich über den ganzen Innenraum erstreckt, ist eine optimale Kühlung aller Speicherzellen erreichbar. Insbesondere kann jede Speicherzelle so gekühlt werden, daß sich alle Speicherzellen auf dem gleichen Temperaturniveau befinden. Die Ausbildung von Wärmenestern zwischen den Speicherzellen oder das Auftreten von Wärmestaus wird vollständig ausgeschlossen. Als Kühlmedium wird vorzugsweise Luft verwendet, die von außen in die Hochtemperaturspeicherbatterie gepumpt und von dort wieder abgesaugt werden kann.

Die Erfindung wird nachfolgend anhand von Zeichnungen erläutert.

Es zeigen :

Figur 1 eine Hochtemperaturspeicherbatterie mit einem Verteiler für das Kühlmedium,

Figur 2 eine Hochtemperaturspeicherbatterie, bei der die Speicherzellen in Modulen zusammengefaßt sind,

Figur 3 ein Modul mit Speicherzellen und einen Verteiler für das Kühlmedium,

Figur 4 eine Variante des in Fig. 3 dargestellten Moduls,

Figur 5 eine weitere Ausführungsform des Moduls mit einem Verteiler,

Figur 6 ein Modul mit keilförmigem Verteiler,

Figuren 7, 8 und 9 mögliche Ausführungsformen der Verteileröffnungen.

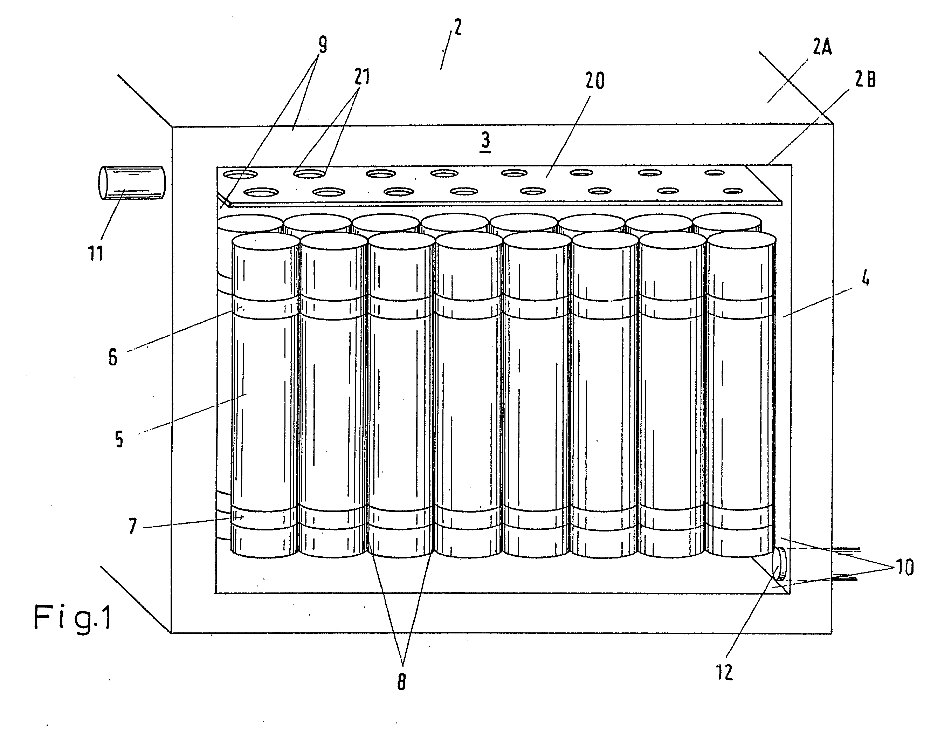

Die in Fig. 1 dargestellte Hochtemperaturspeicherbatterie 1 besteht im wesentlichen aus einem doppelwandigen metallischen Gehäuse 2. Dieses hat bei der hier dargestellten Ausführungsform die Gestalt eines Quaders. Die äußere und die innere Gehäusewandung 2A bzw. 2B sind aus Stahl gefertigt. Sie sind in einem vorgebbaren Abstand voneinander angeordnet, derart, daß zwischen ihnen ein Raum verbleibt, der mit einem Isoliermaterial 3 ausgefüllt ist. Zusätzlich ist dieser Raum evakuiert. Die Gehäusewandungen 2A und 2B sind so ausgebildet, daß dieser Raum nach außen hin gasdicht verschlossen ist. Als Isoliermaterial kann beispielsweise ein oxidkeramisches Pulver verwendet werden. Das Gehäuse 2 weist einen Innenraum 4 auf, der für die Aufnahme der Speicherzellen 5 vorgesehen ist. Die Speicherzellen sind jeweils zu Paaren, eine Reihe bildend, angeordnet. Innerhalb des Innenraumes 4 sind mehrere solcher Reihen von Speicherzellen installiert. Jeweils eine Reihe von Speicherzellen ist mit einer Halterung 6 an ihrem oberen Enden und einer Halterung 7 an ihrem unteren Enden versehen und damit freitragend an den beiden Enden des Innenraumes 4 befestigt. Die Speicherzellen 5 einer jeden Reihe sind miteinander verbunden, daß zwischen je zwei benachbarten Speicherzellen ein Freiraum 8 verbleibt, der sich vom oberen bis zum unteren Ende der Speicherzellen 5 erstreckt. Die Größe des Innenraumes 4 ist so gewählt, daß die Speicherzellen unter Zuhilfenahme der Halterungen 6 und 7 so installiert sind, daß zwischen den oberen und unteren Enden der Speicherzellen und der inneren Gehäusewandung 2B jeweils ein Freiraum 9, 10 verbleibt. In den Freiraum 9 mündet die Zuleitung 11 für das Kühlmedium, mit welchem die von den Speicherzellen 5 erzeugte Wärme abgeleitet wird. Bei dem hier dargestellten Ausführungsbeispiel wird als Kühlmedium Luft verwendet. Die Zuleitung 11 ist durch die beiden Gehäusewandungen 2A und 2B sowie das sich dazwischen befindliche Isoliermaterial 3 hindurchgeführt. Eine Öffnung der Zuleitung 11 steht mit der äußeren Umgebung der Hochtemperaturspeicherbatterie 1 in Verbindung und kann an eine Kühlluftversorgung angeschlossen werden. Zwischen den oberen Enden der Speicherzellen 5 und der Eintrittsöffnung der Kühlmittelzuleitung 11 ist ein Verteiler 20 für die Kühlluft vorgesehen. Dieser ist als Platte ausgebildet. Seine Abmessungen sind so gewählt, daß er die Speicherzellen vollständig überdeckt und mit seinen sämtlichen seitlichen Kanten an der inneren Gehäusewandung 2B anliegt. Die Halterung des Verteilers erfolgt in bekannter Art und Weise. Der Verteiler 20 ist so angeordnet, daß er überall parallel zu den oberen Enden der Speicherzellen 5 verläuft. Sein Abstand von den Speicherzellen beträgt nur wenige Millimeter. Ferner ist der Verteiler 20 mit Öffnungen 21 versehen. Dabei handelt es sich um runde Öffnungen. Diese sind so angeordnet, daß sie über den Bereichen liegen, in denen sich die Freiräume 8 befinden, die zwischen den Speicherzellen 5 angeordnet sind. Die Öffnungen 21 können gleiche oder unterschiedliche Durchmesser aufweisen. Durch die Positionierung der Öffnungen 21 über den Freiräumen 8 wird erreicht, daß die von der Zuleitung 11 kommende Kühlluft entlang des Verteilers strömt und über die Öffnungen 21 in die Freiräume 8 geleitet wird. Dadurch wird erreicht, daß die für die Kühlung einer Speicherzelle 5 vorgesehene Kühlluft die Speicherzelle von ihrem oberen bis zu ihrem unteren Ende rundum umströmen kann. Mit Hilfe des Verteilers 20 werden die Speicherzellen 5 so gekühlt, daß sich alle Speicherzellen auf dem gleichen Temperaturniveau befinden. Durch die Anordnung von vielen Speicherzellen in dem Raum 4 der Hochtemperaturspeicherbatterie 1 ist es nicht auszuschließen, daß sich um manche Speicherzellen aufgrund ihrer Positionierung mehr Wärme anstaut als um andere Speicherzellen. Eine größere Wärmeansammlung ist insbesondere bei Speicherzellen festzustellen, die weiter innen positioniert sind. Die Wärme von Speicherzellen 5, die näher an der inneren Gehäusewandung 2B positioniert sind, wird dagegen besser abgeleitet. In diesem Fall kann durch die Anordnung von Öffnungen 21 mit unterschiedlichen Durchmessern erreicht werden, daß Speicherzellen, um die sich eine größere Menge an Wärme anstaut, mit einer größeren Kühlluftmenge versorgt werden, als Speicherzellen, deren Wärme leichter abfließen kann. Die Größe der Öffnungen 21, sowie die Stellen, an denen große bzw. kleine Öffnungen 21 anzuordnen sind, werden vor dem Bau der Hochtemperaturspeicherbatterie 1 rechnerisch bestimmt.

Die von den oberen Enden der Speicherzellen 5 nach unten strömende Kühlluft gelangt in den Freiraum 10 zwischen den unteren Enden der Speicherzellen 5 und der inneren Gehäusewandung 2B. Von dort wird die erwärmte Kühlluft über die Ableitung 12 aus dem Innenraum 4 abgeführt. Die Ableitung 12 ist an dem der Zuleitung 11 gegenüberliegenden Ende 12 des Innenraumes 4 angeordnet.

Vorzugsweise befindet sich die Ableitung 12 im Bereich des Freiraumes 10. Die Ableitung 12 durchsetzt die beiden Gehäusewandungen 2A und 2B sowie das dazwischen angeordnete Isoliermaterial 3 und ragt mit ihrer zweiten Öffnung in den Außenbereich der Hochtemperaturspeicherbatterie 1.

Ist der Innenraum 4 sehr groß, und sind dort sehr viele Reihen von Speicherzellen 5 angeordnet, so werden vorzugsweise mehrere Verteiler 20 in Form einer solchen Platte angeordnet. Die Verteiler 20 werden so installiert, daß sie in einer Ebene, eine zusammenhängende Fläche bildend, angeordnet sind.

Erfindungsgemäß besteht die Möglichkeit, den Verteiler 20 auch zwischen den unteren Enden der Speicherzellen und der Ableitung 12 anzuordnen. Bei einer solchen Ausführungsform ist der Verteiler 20 in entsprechender Weise mit den Öffnungen 21 versehen. Die Öffnungen 21 werden auch hierbei so angeordnet, wie es in dem dargestellten Ausführungsbeispiel erläutert ist.

Wird der in Figur 1 dargestellte Verteiler 20 anstatt zwischen den oberen Enden der Speicherzellen und der Zuleitung 11 zwischen den unteren Enden der Speicherzellen 5 und der Ableitung 12 positioniert, so wird die gleiche Kühlluftverteilung auf die Speicherzellen 5 erreicht.

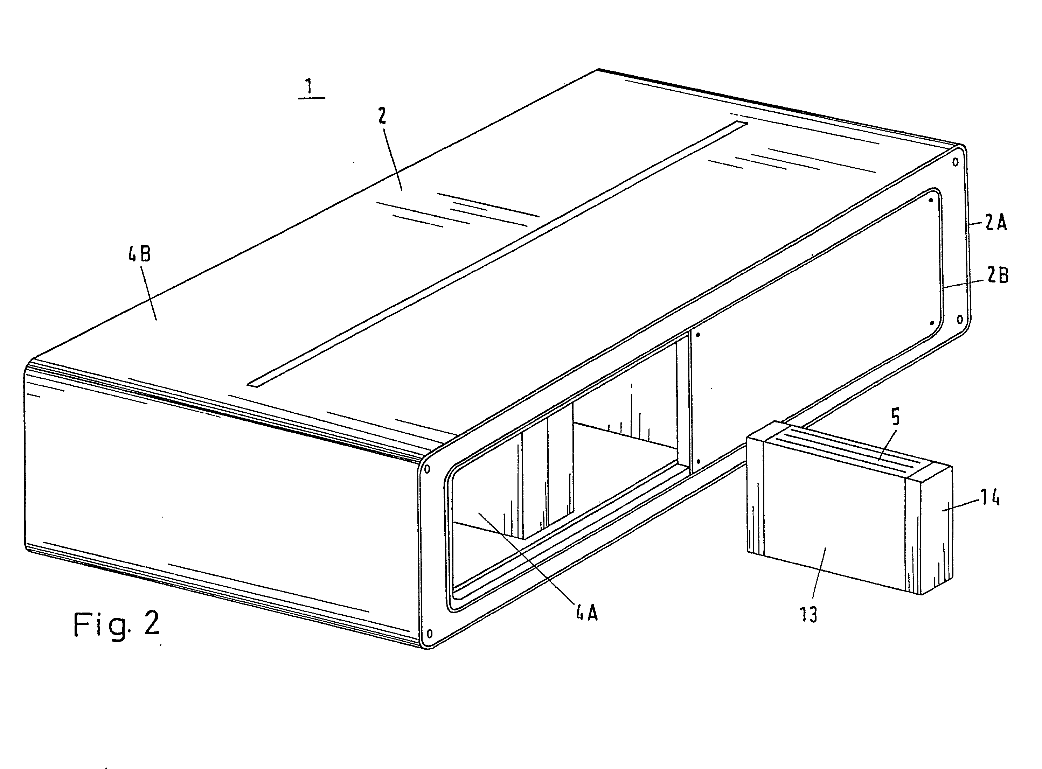

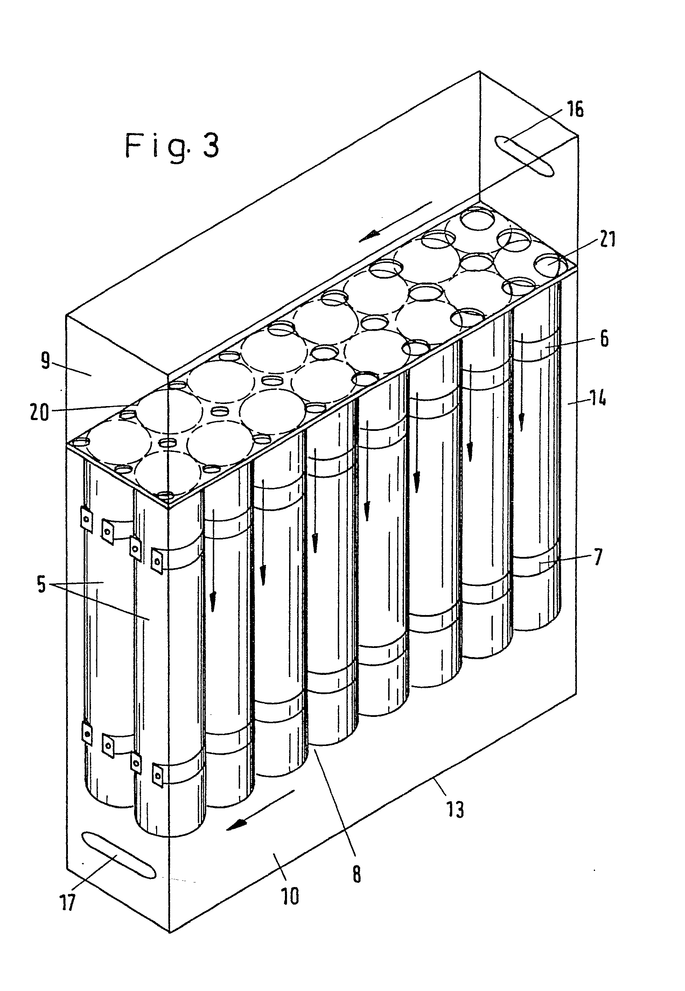

Die in Figur 2 dargestellte Hochtemperaturspeicherbatterie ist im wesentlichen so aufgebaut wie die in Figur 1 dargestellte und in der dazugehörigen Beschreibung erläuterte Hochtemperaturspeicherbatterie 1. Der einzige Unterschied zwischen beiden Ausführungsformen besteht darin, daß der Innenraum des Gehäuses beidseitig der Symmetrieachse der Hochtemperaturspeicherbatterie 1 in zwei Bereiche unterteilt ist, die zur Aufnahme von Modulen 13 dienen. Durch die Entfernung der seitlichen Begrenzungsflächen der Hochtemperaturspeicherbatterie 1 können die Innenräume 4A und 4B zugänglich gemacht werden. Jeder Hohlraum 4A, 4B kann bei dem hier dargestellten Ausführungsbeispiel neun Module 13 aufnehmen. Für jeden Modul 13 ist ein Anschluß (hier nicht dargestellt) für die Kühlluftzufuhr, bzw. Kühlluftabfuhr vorgesehen. Jeder Modul 13 enthält vorzugsweise 16 Speicherzellen 5 (hier nicht dargestellt). Jeder Modul 13 kann unabhängig von den übrigen Modulen 13 in die Hochtemperaturspeicherbatterie 1 eingeschoben, bzw. dieser entnommen werden. Bei der in Figur 2 dargestellten Hochtemperaturspeicherbatterie ist jeder Modul 13 von einer Sicherheitsumhüllung 14 umgeben, die ihn vollständig nach außen hin, insbesondere gegen seine Nachbarmodule 13 abschirmt. Bei einer solchen Ausführungsform einer Hochtemperaturspeicherbatterie 1 ist, wie in Figur 3 dargestellt, in jedem Modul 13 ein Verteiler 20 für die Kühlluft vorgesehen. Figur 3 zeigt die Ausführungsform eines Moduls 13, wie er für die in Figur 2 gezeigte Hochtemperaturspeicherbatterie 1 verwendet werden kann. Der Modul 13 wird durch ein quaderförmiges Gehäuse 14 begrenzt. Im Inneren des Moduls 13 sind 16 Speicherzellen 5 angeordnet. Diese sind paarweise aneinandergefügt, so daß zwei nebeneinanderliegende Reihen von Speicherzellen gebildet werden. Die Speicherzellen 5 sind innerhalb des Moduls 13 freitragend gehalten. Hierfür werden Halterungen 6 und 7 verwendet, die im oberen bzw. unteren Bereich der Speicherzellen 5 angeordnet sind. Die Halterungen 6, 7 werden an den beiden Enden des Moduls 13 in bekannter Weise mit dem Gehäuse 14 verbunden. Die Abmessung des Gehäuses 14 ist so gewählt, daß zwischen ihm und den oberen und unteren Enden der Speicherzellen 5 jeweils ein Freiraum 9 bzw. 10 verbleibt. Um Speicherzellen 5 in den Modul 13 einsetzen zu können, kann ein Teil des Gehäuses 14 entfernt werden. Insbesondere besteht die Möglichkeit, den Modul 13 so auszubilden, daß eine seiner schmalen seitlichen Begrenzungsflächen lösbar ist, so daß von dieser Seite aus die Speicherzellen 5 eingesetzt bzw. entnommen werden können. Am ersten Ende des Moduls 13 ist im oberen Bereich eine Eintrittsöffnung 16 für die Kühlluft vorgesehen. Durch diese wird die Kühlluft in den Freiraum 9 über den oberen Enden der Speicherzellen 5 eingeleitet. Zwischen der Eintrittsöffnung 16 und dem oberen Ende der Speicherzellen 5 ist der Verteiler 20 für die Kühlluft angeordnet. Bei dem hier dargestellten Ausführungsbeispiel ist der Verteiler 20 als Platte ausgebildet, die parallel zu den oberen Enden der Speicherzellen 5 verläuft. Der Abstand zwischen dem Verteiler 20 und den Speicherzellen beträgt nur wenige Millimeter. Die Größe der Platte, die den Verteiler 20 bildet, ist so bemessen, daß durch sie alle Speicherzellen 5 überdeckt werden und sie mit ihren sämtlichen Außenkanten bündig an das Gehäuse 14 anschließt. Die Befestigung der Platte 20 erfolgt vorzugsweise am Gehäuse 14. Zu diesem Zweck ist die Platte 20 an mindestens zwei Stellen mit dem Gehäuse 14 verbunden. Der hier verwendete Verteiler, insbesondere die ihn bildende Platte 20 weist Öffnungen 21 auf, über welche die Kühlluft den Speicherzellen 5 zugeleitet werden kann. Durch die oben beschriebene Anordnung der Speicherzellen 5 in zwei Reihen, die nebeneinanderliegend angeordnet sind, verbleibt zwischen jeweils 4 benachbarten Speicherzellen ein Freiraum 8. Weitere Freiräume 8 werden zwischen jeweils zwei Speicherzellen 5 und dem Gehäuse 14 gebildet. Die Öffnungen 21 sind nun so positioniert, daß über jedem Freiraum 8 mindestens eine solche Öffnung 21 angeordnet ist. Die zwischen benachbarten Speicherzellen 5 bzw. zwischen benachbarten Speicherzellen und dem Gehäuse 14 gebildeten Freiräume 8 erstrecken sich vom oberen bis zum unteren Ende der Speicherzellen 5, wo sie in den Freiraum 10 einmünden. Diese Freiräume 8 dienen als Kanäle entlang derer die Kühlluft, die den Speicherzellen 5 zuzuführen ist, geleitet wird. Die Durchmesser der Öffnungen 21, die sich über den Freiräumen 8 befinden, werden nach der Größe der Kühlluftmenge bemessen, die den einzelnen Freiräumen 8 zuzuleiten ist. Die von den Speicherzellen 5 abgegebene Wärme wird in dem Bereich, der zwischen den Speicherzellen 5 und dem Gehäuse 14 liegt, am schnellsten abgeleitet, während die Wärme zwischen den Reihen der Speicherzellen wesentlich langsamer abgeführt wird. Um alle Speicherzellen auf dem gleichen Temperaturniveau halten zu können, muß deshalb in jeden Freiraum 8 soviel Kühlluft eingeleitet werden, daß die überschüssige Wärme abgeleitet werden kann. Die für jeden Freiraum 8 erforderliche Menge an Kühlluft läßt sich durch die jeweils geeignete Wahl des Öffnungsdurchmessers einregulieren. Diese Werte müssen vor der Herstellung der Hochtemperaturspeicherbatterie einmal rechnerisch oder experimentell ermittelt werden. Während die Kühlluft durch die Freiräume 8 hindurchströmt, nimmt sie die von den Speicherzellen 5 abgegebene Wärme auf. Am unteren Ende der Speicherzellen 5 strömt die Kühlluft in den Freiraum 10, der sich zwischen dem unteren Ende der Speicherzellen 5 und dem Boden des Gehäuses 14 befindet. Am zweiten Ende des Moduls 13, das der Eintrittsöffnung für die Kühlluft gegenüberliegt, befindet sich im Bereich des Freiraumes 10 eine Austrittsöffnung 17. Über diese wird die im Freiraum 10 gesammelte Kühlluft aus dem Modul 13 abgeleitet. Der Verteiler 20 kann auch hierbei unterhalb der Speicherzellen 5 angeordnet werden.

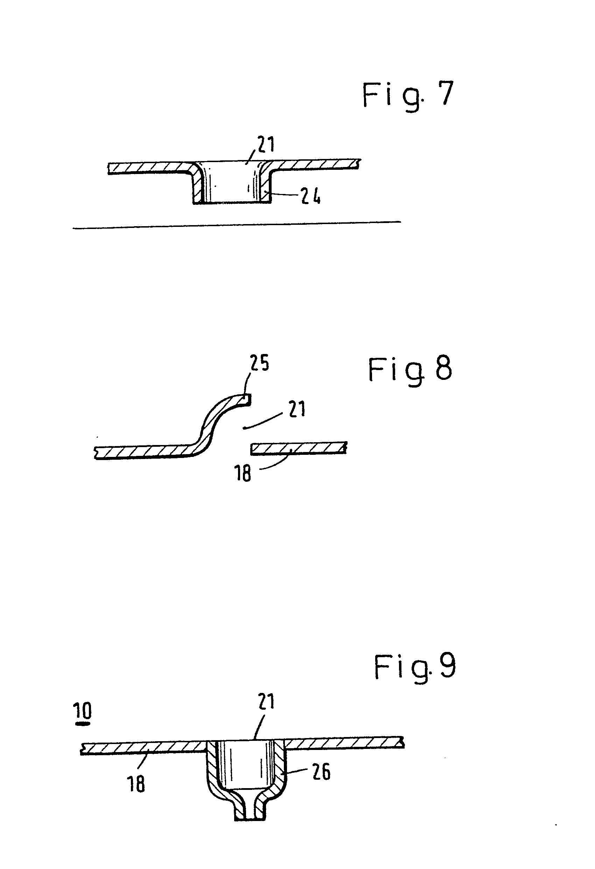

Die Öffnungen 21 des Verteilers 20 sind bei dem hier dargestellten Ausführungsbeispiel als runde Löcher ausgebildet. Die Form der Öffnungen 21 ist jedoch nicht an diese Ausgestaltung gebunden. In den Figuren 7 bis 9 und in den dazugehörigen Beschreibungen sind weitere Ausführungsformen von Öffnungen beschrieben.

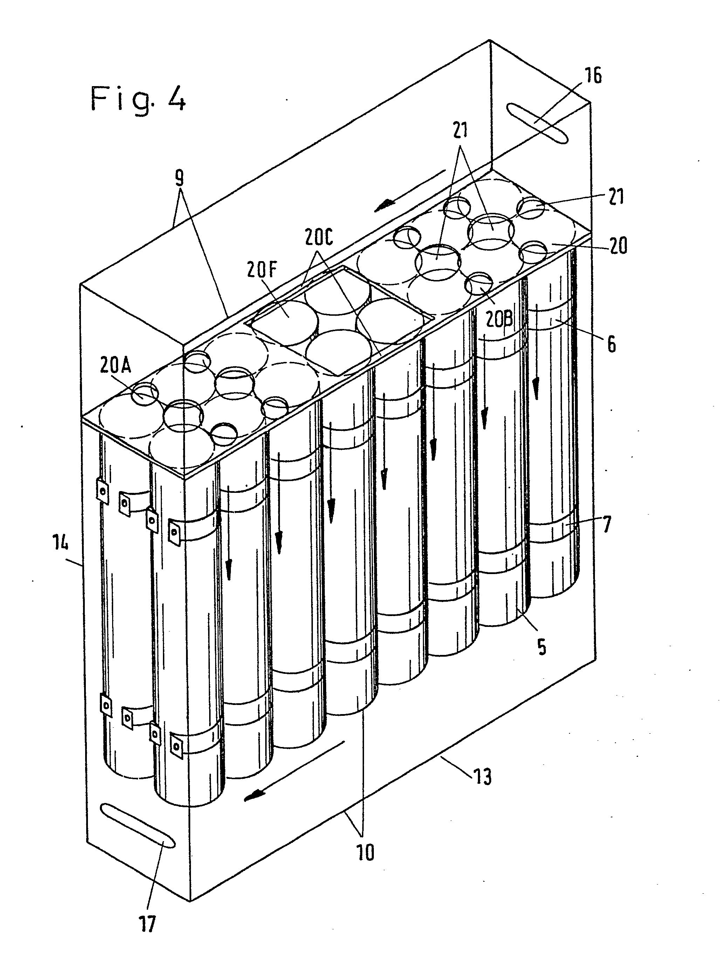

Figur 4 zeigt eine weitere Ausführungsform eines Moduls 13. Dieser ist im wesentlichen so, ausgebildet, wie der in Figur 3 dargestellte und in der dazugehörigen Beschreibung erläuterte Modul 13. Der wesentliche Unterschied zwischen beiden besteht in der Ausführungsform des Verteilers 20. Bei dem hier dargestellten Ausführungsbeispiel wird der Verteiler durch zwei Teilplatten 20A und 20B gebildet. Beide Teilplatten 20A und 20B sind zwischen der Eintrittsöffnung 16 für die Kühlluft und den oberen Enden der Speicherzellen 5 angeordnet. Dabei ist die Teilplatte 20A so mit dem Gehäuse 14 verbunden, daß sie bündig an das erste Ende des Moduls anschließt und ihre seitlichen Ränder ebenfalls am Gehäuse 14 anliegen. Die zweite Teilplatte 20B schließt am zweiten Ende des Moduls an und grenzt ebenfalls mit den seitlichen Kanten an das Gehäuse 14. Die Abmessungen der beiden Teilplatten 20A und 20B sind so bemessen, daß zwischen ihnen ein Freiraum 20F verbleibt. An ihren seitlichen Randbereichen sind die beiden Teilplatten 20A und 20B über je einen Steg 20C miteinander fest verbunden. Jede Teilplatte 20A, 20B ist mit Öffnungen 21 versehen, über welche die Kühlluft den darunterliegenden Speicherzellen 5 zugeführt werden kann. Die Durchmesser der Öffnungen 21 können auch hierbei gleich oder unterschiedlich groß ausgebildet und auf den jeweiligen Kühlluftmengenbedarf in den darunterliegenden Freiräumen 8 zwischen den Speicherzellen 5 abgestimmt sein. Mit dem hier verwendeten Verteiler 20 kann den im mittleren Bereich angeordneten Speicherzellen 5 eine wesentlich größere Kühlluftmenge zugeführt werden. Dies ist besonders vorteilhaft, da es gerade zwischen diesen Speicherzellen 5 zu einem besonders großen Wärmestau kommt.

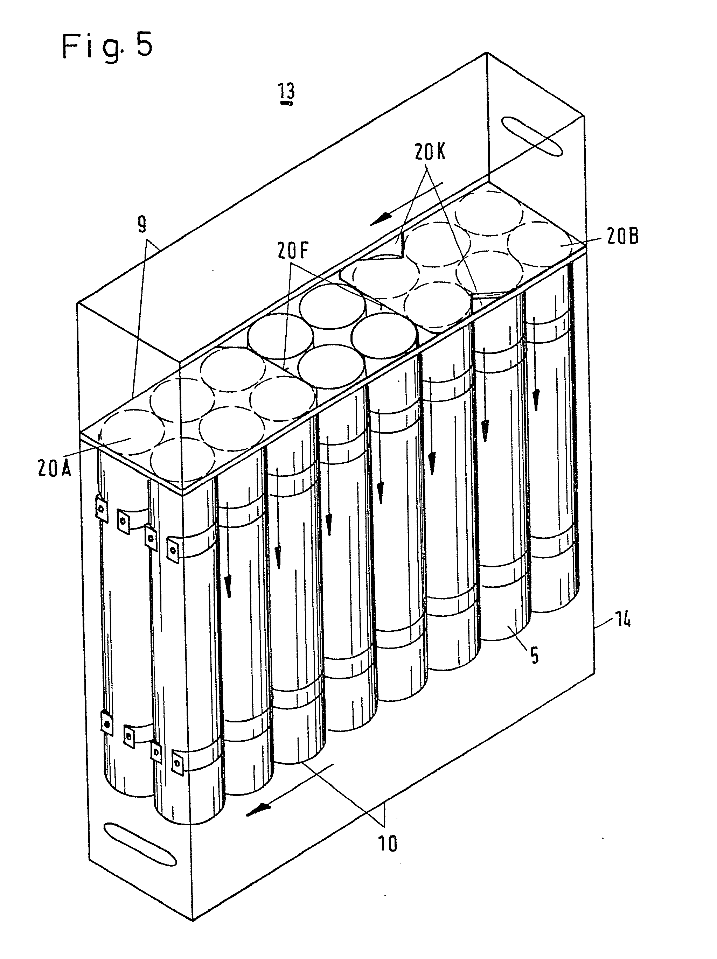

In Figur 5 ist ein weiterer Modul 13 dargestellt, der ebenso wie der in Figur 3 dargestellte Modul aufgebaut ist. Der wesentliche Unterschied zwischen beiden Modulen 13 besteht in der Ausbildung des Verteilers 20. Der hier verwendete Verteiler 20 besteht aus zwei Teilplatten, die in einer parallelen Ebene über den Speicherzellen 5 unterhalb der Eintrittsöffnung 16 für die Kühlluft angeordnet sind. Die Abmessungen dieser beiden Teilplatten 20A und 20B sind so bemessen, daß auch hierbei der mittlere Bereich frei bleibt, so daß die Kühlluft hier direkt gegen die oberen Enden der Speicherzellen 5 strömen kann.

Die Teilplatte 20A ist ferner so bemessen, daß sie mit ihren übrigen Rändern bündig an das Gehäuse 14 anschließt. Öffnungen für den Durchtritt der Kühlluft sind in dieser Platte nicht vorgesehen. Das gleiche gilt für die Teilplatte 20B, die ebenfalls mit ihren Rändern bündig an das Gehäuse 14 anschließt. Abweichend von der Ausführungsform der Teilplatte 20A weist diese in ihren seitlichen Randbereichen jeweils einen keilförmigen Einschnitt 20K auf. Durch diese keilförmigen Einschnitte kann die Kühlluft ebenfalls in die Freiräume 8 zwischen den Speicherzellen strömen. Die größte Menge an Kühlluft strömt jedoch über den Freiraum 20F, der sich zwischen den beiden Teilplatten 20A und 20B befindet, zwischen die Speicherzellen 5.

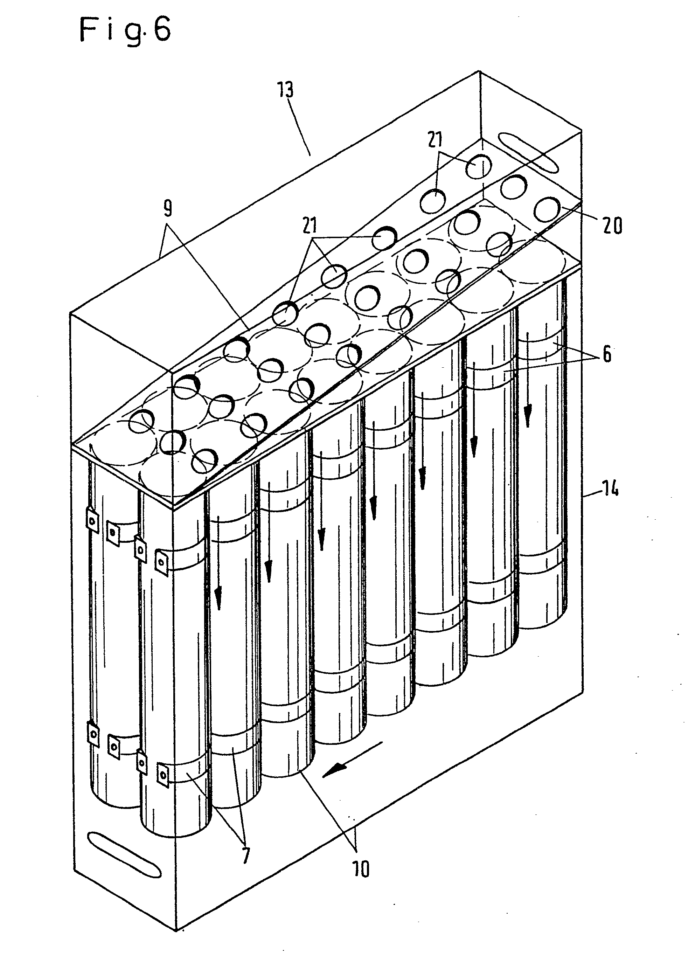

Figur 6 zeigt eine weitere Variante eines Moduls 13. Der Verteiler 20 ist hierbei als Keil ausgebildet. Dieser ist mit seiner ebenen Fläche in einem geringen Abstand über den oberen Enden der Speicherzellen 5 angeordnet. Die schiefe Ebene des Verteilers 20 ist nach oben weisend angeordnet. Der dickere Teil des Verteilers 20 ist im Bereich der Eintrittsöffnung 16 installiert. Die Abmessungen des Keils sind so gewählt, daß sie bündig an das Gehäuse 14 anschließt. Der Keil ist ebenfalls mit Öffnungen 21 für den Durchtritt der Kühlluft nach unten in die Freiräume 8 zwischen den Speicherzellen 5 versehen. Die Durchmesser der Öffnungen 21 können auch hierbei gleich oder unterschiedlich groß ausgebildet sein. Zwischen der oberen und unteren Begrenzungsfläche des Keils ist ein isolierendes Material angeordnet, wobei die Öffnungen 21 ausgespart sind.

Die Öffnungen 21 sind hierbei wiederum als runde Löcher ausgebildet. Es besteht jedoch die Möglichkeit, diesen Öffnungen eine andere Form zu geben. Die gewünschte Kühlluftverteilung kann auch erreicht werden, wenn diese keilförmige Platte 20 zwischen dem unteren Ende der Speicherzellen 5 und der Austrittsöffnung 17 in entsprechender Weise angeordnet wird.

In den Figuren 7, 8 und 9 ist jeweils eine Öffnung 21 des Verteilers 20 dargestellt. Diese Ausführungsformen zeigen Möglichkeiten auf, wie die Öffnungen 21 mit zusätzlichen Führungselementen 24, 25 und 26 versehen werden können. Die Führungselemente 24, 25 und 26 dienen der gezielten Leitung der Kühlluft in die Freiräume 8 zwischen den Speicherzellen 5. Bei der in Figur 7 dargestellten Ausführungsform ist die Öffnung an der Unterseite des Verteilers 20 mit einem Flansch 24 versehen. Dieser bewirkt, daß die durch die Öffnung 21 strömende Kühlluft vollständig in den Freiraum 8 (hier nicht dargestellt) gelangt und nicht an der Unterseite des Verteilers 20 entlangströmt.

In Figur 8 ist die Öffnung 21 eines ebenfalls als Platte ausgebildeten Verteilers 20 dargestellt. Die Öffnung 21 ist auf der Oberseite des Verteilers 20 mit einem bereichsweise angeordnetem Umlenkelement 25 versehen. Dieses ist halbschalenförmig ausgebildet, und in Strömungsrichtung der Kühlluft gesehen, hinter der Öffnung 21 angeordnet. Die Kühlluft, die an der Oberseite des Verteilers 20 entlangströmt, wird durch das Umlenkelement 25 in die Öffnung 21 geleitet. Durch das Umlenkelement 25 wird erreicht, daß bei einer vorgegebenen Strömungsgeschwindigkeit der Kühlluft immer eine ganz bestimmte von der Strömungsgeschwindigkeit der Kühlluft abhängige Luftmenge in die Öffnung 21 geleitet wird.

Die in Figur 9 dargestellte Öffnung 21 weist ein Führungselement 26 auf, das an der Unterseite des Verteilers 20 angeordnet ist. Es ist als Düse ausgebildet. Das Führungselement 26 ist so bemessen, daß es in den darunter befindlichen Freiraum 8 (nicht dargestellt) hineinragt. Durch entsprechende Wahl der Düsenöffnung kann die in den Freiraum 8 einzuleitende Menge an Kühlluft bestimmt werden. Zum anderen läßt sich mit Hilfe der Düse die Strömungsgeschwindigkeit des Kühlmittels innerhalb des jeweiligen Freiraumes 8 bestimmen.

Die Erfindung beschränkt sich nicht nur auf die in den Figuren 1 bis 9 dargestellten Ausführungsformen von Verteilern und Öffnungen, vielmehr umfaßt die Erfindung alle Hochtemperaturspeicherbatterien, bei denen die Verteilung der Kühlluft unter Zuhilfenahme wenigstens eines Verteilers durchgeführt wird.

**Patentansprüche**

1. Hochtemperaturspeicherbatterie (1) mit einem doppelwandigen Gehäuse (2), zwischen dessen Gehäusewandungen (2A und 2B) wenigstens ein Isoliermaterial (3) angeordnet ist, und dessen Innenraum (4, 4A, 4B) wenigstens eine Speicherzelle (5) sowie eine Kühlvorrichtung (8, 9, 10, 11, 12, 16 und 17) mit einem Kühlmedium aufweist, dadurch gekennzeichnet, daß im Innenraum (4, 4A, 4B) des Gehäuses (2) wenigstens ein Verteiler (20) für die Zuleitung des Kühlmediums zu den Speicherzellen (5) vorgesehen ist.

2. Hochtemperaturspeicherbatterie nach Anspruch 1, dadurch gekennzeichnet, daß jeweils eine definierte Anzahl von Speicherzellen (5) zu jeweils einem Modul (13) zusammengefaßt sind.

3. Hochtemperaturspeicherbatterie nach Anspruch 2, dadurch gekennzeichnet, daß in jedem Modul (13) wenigstens ein Verteiler (20) für das Kühlmedium angeordnet ist.

4. Hochtemperaturspeicherbatterie nach Anspruch 1 bis 3, dadurch gekennzeichnet, daß der Verteiler (20) plattenförmig ausgebildet ist.

5. Hochtemperaturspeicherbatterie nach Anspruch 1, dadurch gekennzeichnet, daß der Verteiler (20) zweiteilig ausgebildet ist.

6. Hochtemperaturspeicherbatterie nach einem der Ansprüche 1 bis 5, dadurch gekennzeichnet, daß der Verteiler (20) zwischen der Zuleitung (11, 16) des Kühlmediums und dem oberen Ende der Speicherzellen (5) angeordnet ist.

7. Hochtemperaturspeicherbatterie nach einem der Ansprüche 1 bis 5, dadurch gekennzeichnet, daß wenigstens ein Vorteiler (20) zwischen den unteren Enden der Speicherzellen (5) und der Austrittsöffnung (12, 17) für das Kühlmedium angeordnet ist.

8. Hochtemperaturspeicherbatterie nach einem der Ansprüche 1 bis 7, dadurch gekennzeichnet, daß der Verteiler (20) als durchgehende Platte ausgebildet und mit Öffnungen (21) versehen ist, welche gleiche oder unterschiedliche Durchmesser aufweisen.

9. Hochtemperaturspeicherbatterie nach einem der Ansprüche 1 bis 8, dadurch gekennzeichnet, daß die Öffnungen (21) des Verteiler (20) über den Freiräumen (8) zwischen den Speicherzellen (5) angeordnet sind.

10. Hochtemperaturspeicherbatterie nach einem der Ansprüche 1 bis 8, dadurch gekennzeichnet, daß der Verteiler (20) aus zwei Teilplatten gebildet ist, derart, daß der Bereich über den Speicherzellen (5), die in der Mitte angeordnet sind, freigehalten ist.

11. Hochtemperaturspeicherbatterie nach einem der Ansprüche 1 bis 9, dadurch gekennzeichnet, daß die den Verteiler (20) bildende Platte keilförmig ausgebildet und mit Öffnungen (21) versehen ist, und daß zwischen der Ober- und Unterseite der Platte ein Isoliermaterial (3) angeordnet ist.

## Claims

1. High temperature storage battery (1) with a doublewalled housing (2), between the housing walls (2A and 2B) of which at least one insulating material (3) is disposed, and the interior space of which (4, 4A, 4B) exhibits at least one storage cell (5) as well as a cooling device (8, 9, 10, 11, 12, 16 and 17) with a coolant, characterised in that at least one distributor (20) for the supply of the coolant to the storage cells (5) is provided in the interior space (4, 4A, 4B) of the housing (2).

2. High temperature storage battery according to Claim 1, characterised in that in each instance a defined number of storage cells (5) are combined to form a respective module (13).

3. High temperature storage battery according to Claim 2, characterised in that at least one distributor (20) for the coolant is disposed in each module (13).

4. High temperature storage battery according to Claim 1 to 3, characterised in that the distributor (20) is constructed to be plate-shaped.

5. High temperature storage battery according to Claim 1, characterised in that the distributor (20) is constructed in two parts.

6. High temperature storage battery according to one of Claims 1 to 5, characterised in that the distributor (20) is disposed between the coolant supply (11, 16) and the upper end of the storage cells (5).

7. High temperature storage battery according to one of Claims 1 to 5, characterised in that at least one distributor (20) is disposed between the lower ends of the storage cells (5) and the outlet opening (12, 17) for the coolant.

8. High temperature storage battery according to one of Claims 1 to 7, characterised in that the distributor (20) is constructed as a continuous plate and is provided with openings (21) which exhibit equal or differing diameters.

9. High temperature storage battery according to one of Claims 1 to 8, characterised in that the openings (21) of the distributor (20) are disposed above the free spaces (8) between the storage cells (5).

10. High temperature storage battery according to one of Claims 1 to 8, characterised in that the distributor (20) is formed of two partial plates, in such a manner that the region above the storage cells (5), which are disposed in the centre, is kept clear.

11. High temperature storage battery according to one of Claims 1 to 9, characterised in that the plate forming the distributor (20) is constructed to be wedge-shaped and is provided with openings (21), and in that an insulating material (3) is disposed between the upper and lower surface of the plate.

## Revendications

1. Batterie d'accumulateurs à haute température (1), avec un boîtier (2) à double paroi entre les parois (2A et 2B) duquel est placé au moins un matériau isolant (3) et dont le volume intérieur (4, 4A, 4B) présente au moins un élément d'accumulateur (5) ainsi qu'un dispositif de refroidissement (8, 9, 10, 11, 12, 16 et 17) avec un fluide réfrigérant, caractérisée par le fait qu'il est prévu, pour l'amenée du fluide réfrigérant aux éléments d'accumulateur (5), au moins un distributeur (20) dans le volume intérieur (4, 4A, 4B) du boîtier (2).

2. Batterie d'accumulateurs à haute température selon la revendication 1 caractérisée par le fait qu'un nombre défini d'éléments d'accumulateur (5) est groupé chaque fois en un module (13).

3. Batterie d'accumulateurs à haute température selon la revendication 2 caractérisée par le fait qu'au moins un distributeur (20) est placé dans chaque module (13) pour le fluide réfrigérant.

4. Batterie d'accumulateurs à haute température selon l'une des revendications 1 à 3 caractérisée par le fait que le distributeur (20) est établi en forme de plaque.

5. Batterie d'accumulateurs à haute température selon la revendication 1 caractérisée par le fait que le distributeur (20) est établi en deux parties.

6. Batterie d'accumulateurs à haute température selon l'une des revendications 1 à 5 caractérisée par le fait que le distributeur (20) est placé entre l'amenée (11, 16) du fluide réfrigérant et l'extrémité supérieure des éléments d'accumulateur (5).

7. Batterie d'accumulateurs à haute température selon l'une des revendications 1 à 5 caractérisée par le fait qu'au moins un distributeur (20) est placé entre les extrémités inférieures des éléments d'accumulateur (5) et l'orifice de sortie (12, 17) pour le fluide réfrigérant.

8. Batterie d'accumulateurs à haute température selon l'une des revendications 1 à 7 caractérisée par le fait que le distributeur (20) est établi en plaque continue et muni d'ouvertures qui présentent des diamètres égaux ou différents entre eux.

9. Batterie d'accumulateurs à haute température selon l'une des revendications 1 à 8 caractérisée par le fait que les ouvertures (21) du distributeur (20) sont placées au-dessus des espaces libres (8) entre les éléments d'accumulateur (5).

10. Batterie d'accumulateurs à haute température selon l'une des revendications 1 à 8 caractérisée par le fait que le distributeur (20) est formé de deux plaques partielles en sorte que la zone placée au-dessus des éléments d'accumulateur (5) qui se trouvent au milieu soit maintenue libre.

11. Batterie d'accumulateurs à haute température selon l'une des revendications 1 à 9 caractérisée par le fait que la plaque formant le distributeur (20) est établie en forme de coin et munie d'ouvertures (21) et qu'un matériau isolant (3) est placé entre la face supérieure et la face inférieure de ladite plaque.

Fig.1

Fig. 2

Fig. 3

# Fig. 4

# Fig. 5

# Fig. 6

Fig. 7

Fig. 8

Fig. 9